# EUROPEAN PATENT SPECIFICATION

(11) **EP 4 141 295 B1**
(45) Date of publication and mention of the grant of the patent: **13.08.2025**
(21) Application number: 21791602.2
(22) Date of filing: 01.03.2021
(51) Int. Cl.: F16J 15/00, H01M 8/0276, H01M 8/0286, F16J 15/14, F16J 15/08, H01M 8/0284, H01M 8/10

(54) **GASKET MANUFACTURING METHOD**
VERFAHREN ZUR HERSTELLUNG EINER DICHTUNG
PROCÉDÉ DE FABRICATION DE JOINT D'ÉTANCHÉITÉ

(30) Priority: 20.04.2020 JP 2020074889
(43) Date of publication of application: 01.03.2023
(73) Proprietor: NOK Corporation, Minato-ku, Tokyo 105-8585 (JP)
(72) Inventor: YUI, Hajime, Fujisawa-shi, Kanagawa 251-0042 (JP); TOMITA, Ryo, Fujisawa-shi, Kanagawa 251-0042 (JP); NISHIMURA, Takuro, Kikugawa-shi, Shizuoka 437-1507 (JP); YUASA, Taiki, Kikugawa-shi, Shizuoka 437-1507 (JP)
(74) Representative: Global IP Europe Patentanwaltskanzlei
(86) International application number: PCT/JP2021/007724
(87) International publication number: WO 2021/215114

(56) References cited:
- WO-A1-2017/212775
- WO-A1-2020/121623
- CN-U- 201 623 197
- JP-A- 2003 031 235
- JP-A- 2003 031 235
- JP-A- 2007 134 234
- JP-A- 2007 134 234

## Description

### [Technical Field]

The present invention relates to a method of manufacturing a gasket such as a separator-integrated gasket for fuel cells.

### [Background Art]

A technique for fuel cell applications in which separators are provided with beads and gaskets made of elastic material are integrally formed on the beads has hitherto been known (see **PTL** 1). According to this technique, the beads provide a predetermined reaction force, which allows the gaskets made of elastic material to conform to and make tight contact with even minute irregularities on a surface with which the gaskets are to be close contact so that the sealing performance can be enhanced.

The beads have a contour in plan view that includes linear portions and curved portions. The reaction force of the beads tends to be higher in the curved portions than in the linear portions. The reaction force also tends to be higher in portions with a smaller radius of curvature. The applicants of the present invention have previously proposed a technique for making the reaction force of the beads uniform by designing the beads to be wider in their short direction in curved portions than in linear portions, and to be wider proportionally in portions with smaller radii of curvature (see **PTL** 2).

It was found out that, with this technique, in the case where the gasket was integrally provided to the separator body by a conventional method, the gasket thickness was not uniform because of a tendency of the gasket having a smaller thickness in portions of the beads that are wide in the short direction, when compared to narrow portions. This leaves a scope of improvement because unevenness in the thickness of the gasket leads to inconsistent sealing performance. Similar issues could conceivably arise not only with separator-integrated gaskets but in the case with common metal gaskets.

JP 2003-031235 A discloses a gasket manufacturing method comprising the steps of:
dispensing a gasket material along a bead provided to a base member by moving a dispensing apparatus that dispenses the gasket material relative to the base member; and
curing the gasket material dispensed on the bead; wherein
the bead includes a plurality of portions each having a different width in a short direction thereof, and
the dispensing apparatus operates in different moving speeds relative to the base member at each of the plurality of portions.

### [Citation list]

### [Patent Literature]

[PTL 1]
   JP 2017-139218 A
[PTL 2]
   JP 2018-231660 A

### [Summary of Invention]

### [Technical Problem]

An object of the present invention is to provide a gasket manufacturing method that enables an improvement in sealing performance by making the thickness of the gasket formed on beads on a base member more uniform.

### [Solution to Problem]

The present invention is defined by claim 1 and adopts the following means to achieve the object discussed above.

The gasket manufacturing method of the present invention includes the steps of:
dispensing a gasket material along a bead provided to a base member by moving a dispensing apparatus that dispenses the gasket material relative to the base member; and
curing the gasket material dispensed on the bead, wherein
the bead includes a plurality of portions each having a different width in a short direction thereof, and
the dispensing apparatus operates in different moving speeds relative to the base member at each of the plurality of portions.

This way, the gasket material is dispensed at a moving speed in accordance with the width in the short direction of the bead, so that the thickness of the gasket can be adjusted suitably.

Compared to the moving speed in a narrow portion of the bead having a small width in the short direction, the moving speed may be slower in a wide portion having a larger width than the narrow portion.

The wider the bead is in the short direction thereof, the smaller the gasket thickness tends to be, as the gasket material being dispensed easily spreads widthwise. Such a reduction in thickness can be prevented by slowing down the moving speed of the dispensing apparatus relative to the separator.

The bead includes a portion that is linear in plan view and a portion that is curved in plan view, the curved portion being wider than the linear portion.

The curved portion is provided with portions with different radii of curvature, and, compared to the width in a first portion having a large radius of curvature, the width is larger in a second portion having a smaller radius of curvature than the first portion.

The configurations described above can be adopted in any possible combinations.

### [Advantageous Effects of Invention]

As described above, according to the present invention, the thickness of the gasket formed on a bead provided on a base member can be made uniform, whereby the sealing performance can be enhanced.

### [Brief Description of Drawings]

[Fig. 1]

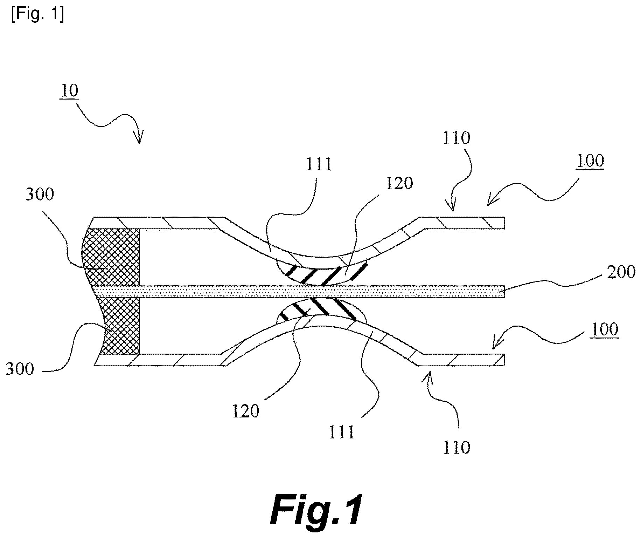

   Fig. 1 is a cross-sectional view illustrating a part of a fuel cell according to one embodiment of the present invention.
[Fig. 2]

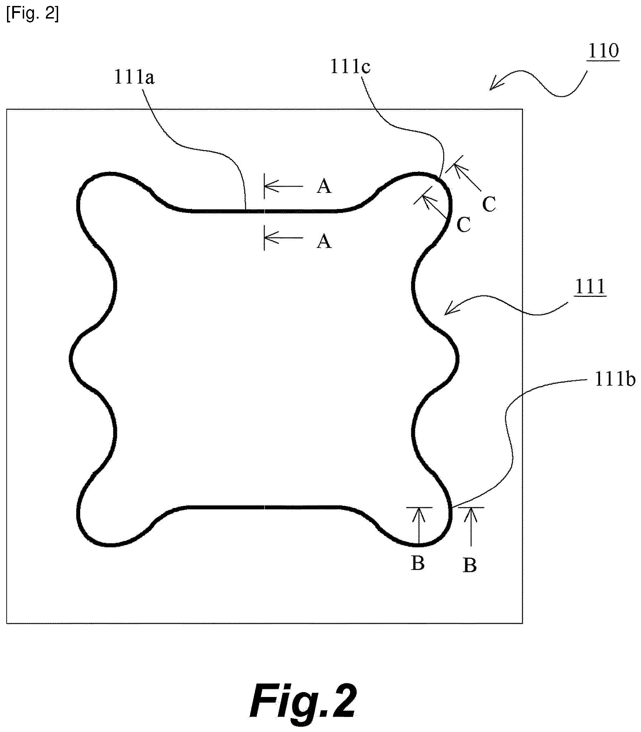

   Fig. 2 is a plan view of a separator body according to the embodiment of the present invention.
[Fig. 3]

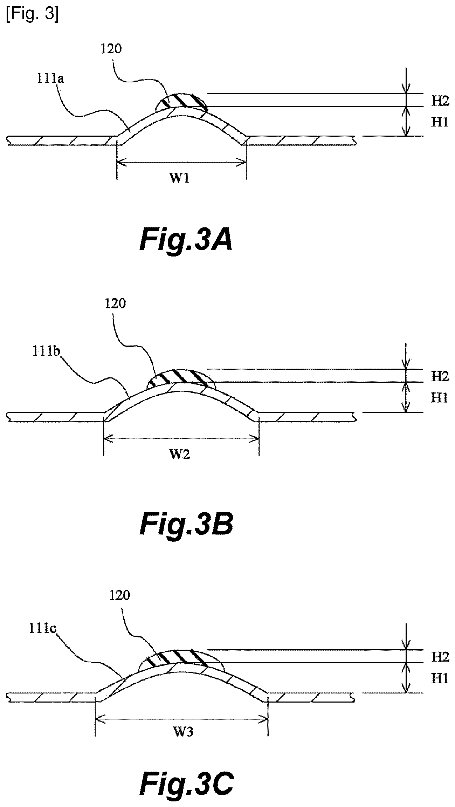

   Fig. 3 is a cross-sectional view of a separator-integrated gasket according to the embodiment of the present invention.
[Fig. 4]

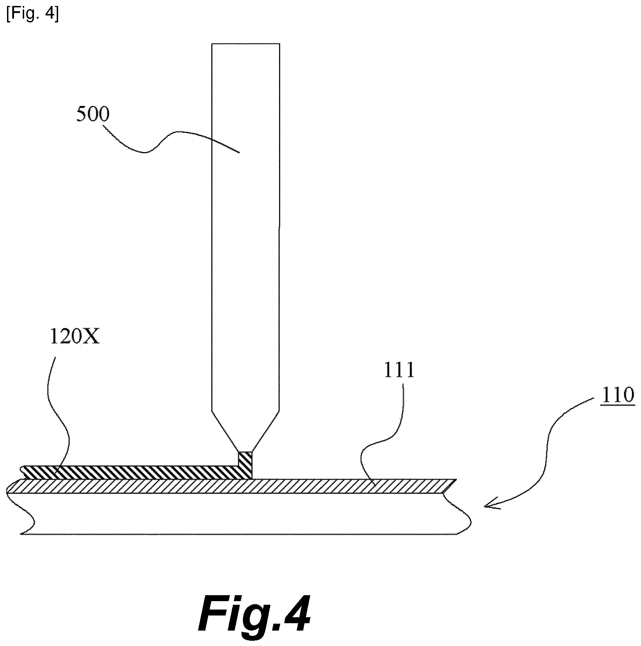

   Fig. 4 is a diagram illustrating a process of manufacturing the separator-integrated gasket according to the embodiment of the present invention.
[Fig. 5]

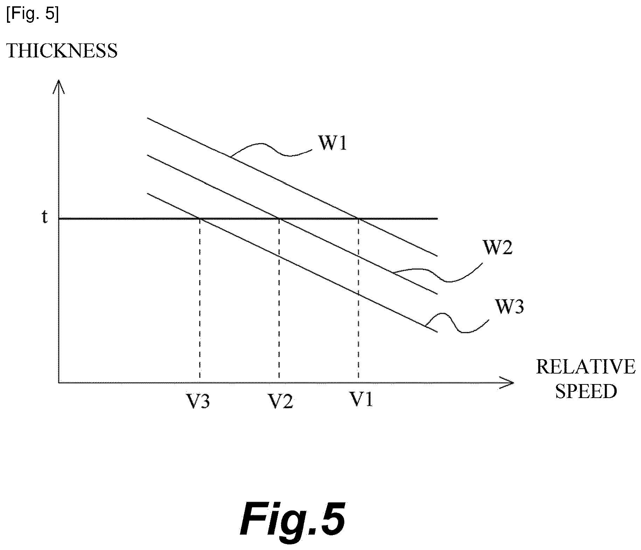

   Fig. 5 is a graph showing a relationship between the moving speed of a dispensing apparatus relative to the separator and the thickness of the gasket material.

### [Description of Embodiments]

Hereinafter, modes for carrying out this disclosure will be illustratively described in detail based on a specific embodiment with reference to the drawings. It should be noted that, unless otherwise particularly specified, the sizes, materials, shapes, and relative arrangement or the like of constituent components described in the embodiment are not intended to limit the scope of this disclosure.

### (Embodiment)

A gasket manufacturing method according to the embodiment of the present invention will be described with reference to Fig. 1 to Fig. 5. In this embodiment, a manufacturing method for a separator-integrated gasket will be described as one example of the gasket manufacturing method.

### <Fuel Cell>

A fuel cell provided with the separator-integrated gasket 100 according to the embodiment will be described with reference to Fig. 1. Generally, a fuel cell is configured as a cell stack composed of a plurality of single cells. Fig. 1 illustrates a cross-sectional view of a single cell 10. The single cell 10 includes a pair of separator-integrated gaskets 100 and an MEA (Membrane Electrode Assembly) provided between the pair of separator-integrated gaskets 100. The MEA includes an electrolyte membrane 200 and a pair of gas diffusion layers 300 on both sides of the electrolyte membrane 200.

### <Separator-Integrated Gasket>

The separator-integrated gasket 100 provided in the fuel cell (single cell 10) will now be described in more detail with reference to Fig. 1 and Fig. 2. Fig. 2 is a plan view of a separator body according to the embodiment of the present invention. Fig. 2 shows a schematic plan view of the separator body 110 before the gasket 120 is provided thereto.

The separator-integrated gasket 100 includes a separator body (base member) 110 designed for fuel cells, and a gasket 120 made of an elastic material and integrally formed to the separator body 110. The separator body 110 is formed by a plate-like member made of metal, for example. Carbon materials, resin materials and the like can also be adopted as the material of the separator body 110. While it is common to provide a plurality of manifolds to the separator body 110, and flow channels on the surface of the separator body 110, the drawings omit illustration of these elements. Manifolds are provided to distribute the fuel gas, oxidant gas, cooling liquid and the like to each of the cells. The flow channels formed on the surface of the separator body 110 are used for the fuel gas, oxidant gas and the like to flow through.

The gasket 120 made of an elastic material described above is integrally formed to the separator body 110 around each manifold and around each region where flow channels are formed to prevent leakage of the fuel gas and others mentioned above to the outside. In this embodiment, to improve the sealing performance, a bead 111 is provided to the separator body 110 and the gasket 120 is formed on this bead 111. This configuration is adopted so that a predetermined reaction force is provided by the bead 111, which allows the gasket 120 made of elastic material to conform to and make tight contact with even minute irregularities on a surface with which the gaskets 120 are to be close contact so that the sealing performance can be enhanced.

The separator body 110 is formed with the bead 111 around each manifold and around each region with flow channels, with the gasket 120 made of elastic material formed on each of these beads 111. Namely, the separator body 110 is formed with beads in several locations, although, for brevity, Fig. 2 shows a simplified illustration of the bead 111 in only one location.

Examples of favorable materials for the gasket 120 include silicone rubber, fluoride rubber, EPDM, butyl rubber, and so on. The gasket 120 seals the gap between the separator body 110 and the electrolyte membrane 200.

### <Separator Body>

The separator body 110 according to this embodiment will be described in more detail with reference particularly to Fig. 2 and Fig. 3. Fig. 3 shows cross-sectional views of the separator-integrated gasket 100 according to the embodiment of the present invention. Fig. 3A, Fig. 3B and Fig. 3C respectively show cross sections of the separator body taken along A-A, B-B and C-C in Fig. 2.

Beads 111 provided to the separator body 110 according to this embodiment include linear portions and curved portions in plan view. The curved portions include portions with different radii of curvature. For the convenience of explanation, hereinafter where applicable, a portion of the bead 111 that is linear in plan view shall be called a "linear portion," and a portion that is curved in plan view shall be called a "curved portion." Where applicable, a portion with a large radius of curvature in a curved portion shall be called a "first portion," and a portion with a smaller radius of curvature than that of the "first portion" shall be called a "second portion."

The A-A cross section shown in Fig. 3A is the cross section of a linear portion 111a of the bead 111. The B-B cross section shown in Fig. 3B is the cross section of a first portion 111b of the bead 111. The C-C cross section shown in Fig. 3C is the cross section of a second portion 111c of the bead 111.

In this embodiment, the bead 111 is designed to be wider in the short direction of the bead 111 in the curved portions (first portion 111b and second portion 111c) than in the linear portion 111a. Therefore, the linear portion 111a can be called a "narrow portion." The curved portion can be called a "wide portion," since it is wider in the short direction of the bead 111 than the linear portion 111a. More specifically, as illustrated in Fig. 3, the linear portion, first portion, and second portion satisfy W1 < W2 and W1 < W3, where W1 represents the width in the short direction of the linear portion 111a, W2 represents the width in the short direction of the first portion 111b, and W3 represents the width in the short direction of the second portion 111c. The bead 111 is designed also such that the second portion 111c with a smaller radius of curvature than that of the first portion 111b has a larger width in the short direction than the width in the short direction of the first portion 111b having a large radius of curvature. Namely, W2 < W3 is satisfied. When the first portion 111b and second portion 111c are compared, the latter is wider in the short direction, and therefore the first portion 111b can be called a "narrow portion" and the second portion 111c can be called a "wide portion." As shown above, the "narrow portion" and "wide portion" are defined in relation to another portion they are compared to.

The bead 111 is configured to have a height H1 that is equal over the entire length. The gasket 120 formed on the bead 111 is also configured to have a thickness H2 that is equal over the entire length. The thickness H2 of the gasket 120 should preferably be set in a range from 20 µm to 300 µm inclusive. The width in the short direction of the gasket 120 should preferably be set in a range from 1 mm to 3 mm inclusive.

### <Manufacturing Method of Separator-Integrated Gasket>

A manufacturing method of the separator-integrated gasket according to this embodiment will be described with reference particularly to Fig. 4 and Fig. 5. Fig. 4 is a diagram illustrating a process of manufacturing the separator-integrated gasket according to the embodiment of the present invention. Fig. 5 is a graph showing a relationship between the moving speed of a dispensing apparatus relative to the separator and the thickness of the gasket material.

The manufacturing method of the separator-integrated gasket according to this embodiment includes a dispensing step wherein a dispensing apparatus 500 dispenses a gasket material 120X (such as liquid rubber) on a bead 111 of a separator body 110, and a curing step of curing the dispensed gasket material 120X. Fig. 4 shows a simplified illustration of a state in the dispensing step. In Fig. 4, the separator body 110 is shown only partly in a cross section cut along the bead 111.

In the case of using a dispensing apparatus 500 to dispense the gasket material 120X on the bead 111 of the separator body 110, any one of a configuration where the dispensing apparatus 500 is moved while the separator body 110 is fixed, a configuration where the separator body 110 is moved while the dispensing apparatus 500 is fixed, and a configuration where both the dispensing apparatus 500 and separator body 110 are moved, may be adopted. Fig. 4 shows a state in which a dispensing apparatus 500 is dispensing a gasket material 120X while moving from left to right in the drawing relative to the separator body 110. The mechanisms that move the dispensing apparatus and separator body, controllers that control the movements, etc., are known techniques and therefore description thereof will be omitted. Various known techniques such as dispensers and inkjet apparatuses may be adopted as the dispensing apparatus 500.

A thermosetting rubber material can be applied as the gasket material 120X of this embodiment. In this case, the separator body 110 on which the gasket material 120X has been applied is heated by a heater (not shown) in the curing step so that the gasket material 120X cures and is fixed to the separator body 110. The gasket 120 can thus be formed integrally to the separator body 110.

As described above, the bead 111 according to this embodiment has a plurality of portions having different widths in the short direction. In the dispensing step, the moving speed of the dispensing apparatus 500 relative to the separator body 110 (hereinafter, the speed will be referred to as "relative speed") is set different in respective portions of the bead 111 having different widths in the short direction. Fig. 5 shows a relationship between the relative speed and the thickness of the applied gasket material 120X in each of the portions of the bead 111 having different widths in the short direction. Graphs W1, W2, and W3 respectively correspond to the portions with widths W1, W2, and W3 in the short direction of the bead 111.

As is seen from this graph, the thickness of the gasket material 120X becomes thinner as the relative speed is increased irrespective of the width in the short direction of the bead 111. It can also be seen that the wider the bead 111 is in the short direction, the thinner the thickness of the gasket material 120X becomes. It thus follows that, to achieve a desired thickness t in respective portions, the relative speed should be V1 in the portion with width W1, the relative speed should be V2 in the portion with width W2, and the relative speed should be V3 in the portion with width W3 (V1 > V2 > V3).

As described above, in this embodiment, the relative speeds V2 and V3 in wide portions having a larger width in the short direction of the bead 111 than the linear portion 111a are set slower than the relative speed V1 in the linear portion 111a that is narrower in the short direction of the bead 111. The relative speed V3 in the second portion 111c that is wider in the short direction of the bead 111 is set slower than the relative speed V2 in the first portion 111b. This way, the thickness of the gasket material 120X can be made constant (to a desired thickness t) in any of the linear portion 111a, first portion 111b, and second portion 111c. Thus the gasket 120 after it has cured can have a constant thickness in all the portions.

### <Advantages of the Manufacturing Method of Separator-Integrated Gasket According to the Embodiment>

In the separator-integrated gasket 100 according to this embodiment, the bead 111 on the separator body 110 employs a configuration in which the width in the short direction of the bead 111 varies depending on whether the portion is linear or curved in plan view, and depending on the radius of curvature when the portion is curved in plan view. Thus the reaction force of the bead 111 is made uniform.

In the manufacturing method of the separator-integrated gasket 100 according to this embodiment, the relative speed is changed in accordance with the width in the short direction of the bead 111 in the dispensing step. The thickness of the gasket 120 formed on the bead 111 can thus be made uniform, whereby the sealing performance can be enhanced.

### (Others)

While the bead 111 has three locations with different widths in the short direction in the embodiment described above, it should be understood that the thickness of the gasket 120 can be made uniform by setting the relative speed similarly in other cases where the width varies in two locations, or four or more locations.

In a portion shaped such that the width in the short direction of the bead 111 changes continuously, the relative speed may be changed continuously. For such a portion where the width in the short direction of the bead 111 changes continuously, it is also possible to make the thickness of the gasket 120 uniform to some degree by changing the relative speed stepwise.

Although the embodiment described above relates to a manufacturing method of a separator-integrated gasket, the gasket manufacturing method of the present invention is also applicable to metal gaskets, for example, and to various techniques for forming a gasket on a bead provided on a base member (metal plate in the case with a metal gasket).

### [Reference Signs List]

- 10: Single cell
- 100: Separator-integrated gasket
- 110: Separator body (base member)
- 111: Bead
- 111a: Linear portion
- 111b: First portion
- 111c: Second portion
- 120: Gasket
- 120X: Gasket material
- 200: Electrolyte membrane
- 300: Gas diffusion layer
- 500: Dispensing apparatus

## Claims

1. A gasket manufacturing method comprising the steps of:
dispensing a gasket material (120X) along a bead (111) provided to a base member (110) by moving a dispensing apparatus (500) that dispenses the gasket material (120X) relative to the base member (110); and
curing the gasket material (120x) dispensed on the bead (111); wherein
the bead (111) includes a plurality of portions each having a different width (W1, W2, W3) in a short direction thereof, and
the dispensing apparatus (500) operates in different moving speeds (V1, V2, V3) relative to the base member (110) at each of the plurality of portions, **characterized in that**
the bead (111) includes a portion (111a) that is linear in plan view and a portion (111b, 111c) that is curved in plan view, the curved portion (111b, 111c) being wider than the linear portion, and
the curved portion (111b, 111c) is provided with portions with different radius of curvature, and, compared to the width in a first portion (111b) having a large radius of curvature, the width is larger in a second portion (111c) having a smaller radius of curvature than the first portion.

2. The gasket manufacturing method according to claim 1, wherein, compared to the moving speed in a narrow portion of the bead (111) having a small width in the short direction, the moving speed is slower in a wide portion having a larger width than the narrow portion.

## Patentansprüche

1. Verfahren zur Herstellung einer Dichtung, das die Schritte aufweist:
Abgeben eines Dichtungsmaterials (120X) entlang eines Wulstes (111), der an einem Basiselement (110) vorgesehen ist, indem eine Abgabevorrichtung (500),
die das Dichtungsmaterial (120X) abgibt, relativ zu dem Basiselement (110) bewegt wird; und
Aushärten des auf den Wulst (111) abgegebenen Dichtungsmaterials (120X); wobei
der Wulst (111) mehrere Abschnitte aufweist, die jeweils eine unterschiedliche Breite (W1, W2, W3) in einer kurzen Richtung davon aufweisen, und
die Abgabevorrichtung (500) an jedem der mehreren Abschnitte mit unterschiedlichen Bewegungsgeschwindigkeiten (V1, V2, V3) relativ zum Basiselement (110) arbeitet, **dadurch gekennzeichnet, dass** der Wulst (111) einen Abschnitt (111a), der in der Draufsicht linear ist, und
einen Abschnitt (111b, 111c) aufweist, der in der Draufsicht gekrümmt ist, wobei der gekrümmte Abschnitt (111b, 111c) breiter ist als der lineare Abschnitt, und
der gekrümmte Abschnitt (111b, 111c) mit Abschnitten mit unterschiedlichem Krümmungsradius versehen ist und die Breite in einem zweiten Abschnitt (111c) mit einem kleineren Krümmungsradius größer ist als in einem ersten Abschnitt (111b) mit einem großen Krümmungsradius.

2. Verfahren zur Herstellung einer Dichtung nach Anspruch 1, wobei die Bewegungsgeschwindigkeit in einem breiten Abschnitt, der eine größere Breite als der schmale Abschnitt aufweist, langsamer ist als die Bewegungsgeschwindigkeit in einem schmalen Abschnitt des Wulstes (111), der eine kleine Breite in der kurzen Richtung aufweist.

## Revendications

1. Procédé de fabrication d'un joint d'étanchéité, comprenant les étapes suivantes :
dépôt d'un matériau de joint d'étanchéité (120X) le long d'un cordon (111) prévu sur un élément de base (110) par déplacement d'un dispositif de dépôt (500) répartissant le matériau de joint d'étanchéité (120X) par rapport à l'élément de base (110) ; et
durcissement du matériau de joint d'étanchéité (120X) réparti sur le cordon (111) ; où
le cordon (111) comprend une pluralité de parties ayant chacune une largeur différente (W1, W2, W3) dans le sens de la largeur de celui-ci, et
le dispositif de dépôt (500) fonctionne à différentes vitesses de déplacement (V1, V2, V3) par rapport à l'élément de base (110) sur chaque partie de la pluralité de parties, **caractérisé en ce que**
le cordon (111) comprend une partie (111a) rectiligne en vue en plan et une partie (111b, 111c) incurvée en vue en plan, ladite partie incurvée (111b, 111c) étant plus large que la partie rectiligne, et
la partie incurvée (111b, 111c) est pourvue de parties de rayons de courbure différents, et, comparativement à la largeur dans une première partie (111b) ayant un grand rayon de courbure, la largeur est supérieure dans une deuxième partie (111c) ayant un rayon de courbure inférieur à celui de la première partie.

2. Procédé de fabrication de joint d'étanchéité selon la revendication 1, où, comparativement à la vitesse de déplacement dans une partie étroite du cordon (111) ayant une largeur inférieure dans le sens de la largeur, la vitesse de déplacement est inférieure dans une partie étendue de largeur supérieure à celle de la partie étroite.
